# EUROPEAN PATENT APPLICATION

(11) **EP 2 127 712 A1**
(43) Date of publication of application: **02.12.2009**
(21) Application number: 07831646.0
(22) Date of filing: 12.11.2007
(51) Int. Cl.: A63F 13/10, A63F 13/00

(54) **GAME PROGRAM, GAME MACHINE, AND GAME CONTROL METHOD**

(30) Priority: 22.03.2007 JP 2007074607; 22.03.2007 JP 2007074608
(71) Applicant: Konami Digital Entertainment Co., Ltd., Tokyo 107-8324 (JP)
(72) Inventor: YAMAGUCHI, Tsuyoshi, Tokyo 107-8324 (JP); SHIMIZU, Akihiko, Tokyo 107-8324 (JP); KOBAYASHI, Hiroaki, Tokyo 107-8324 (JP); TOYOHARA, Koji, Tokyo 107-8324 (JP); YOKOTA, Ken, Tokyo 107-8324 (JP)
(74) Representative: Driver, Virginia Rozanne
(86) International application number: PCT/JP2007/071916
(87) International publication number: WO 2008/117490

(57) **Abstract**

The interest of a player in viewing an opening demonstration video is kept high in a game program. In the game program, opponent teams in a competition game played by a CPU (7) are determined by operation of a controller (17) of the player through an opponent team determining means (52); an opening demonstration video of the competition game between the opponent teams determined by the opponent team determining means (52) is determined by the CPU (7) through an opening demonstration video determining means (53); and the opening demonstration video determined by the opening demonstration video determining means (53) is displayed/played back on a monitor by the CPU (7) through an opening demonstration video display/playback means (54) prior to the start of a competition game. In this game program, after a virtual competition game is played by the CPU (7), a highlight scene in the virtual competition game that satisfies a predetermined highlight condition is determined from within the virtual competition game by a highlight scene determining means (55).

## Description

### TECHNICAL FIELD

The present invention relates to a game program, and particularly to a game program for causing a computer to implement a game to be displayed/played back on a monitor, before the start of a competition game played by operation of an operating unit of a player, an opening demonstration video of a competition game played by a control unit. The present invention also relates to a game apparatus and a game control method implemented by the game program.

### BACKGROUND ART

Various games have conventionally been proposed. One of these is a video game, e.g., a baseball game in which player characters displayed on a monitor are caused to move and a contest is carried out. In this type of baseball game, a player can select one baseball team to which player characters belong, and can compete with another computer or player that selects another baseball team (see Non-patent Document 1: Pro Baseball Sprits 3, Authorized Guide Complete Edition, Japan, Konami Digital Entertainment, 6 April 2006.)

In such a baseball game, the appearance of the baseball game actually being played is displayed/played back as an opening demonstration video before the player begins competition with the other player or computer. Specifically, the video shows two teams arbitrarily selected by a computer competing with each other as computers, and is displayed/played back from the top of the first inning. By thus displaying/playing back an opening demonstration video at a storefront, for example, the content of the game can be made appealing to the general public, and displaying/playing back the opening demonstration video at the storefront in between the start of competition between players and other players or computers enables the opening demonstration video displayed/played back on the monitor to be enjoyed even when a player is not playing a competition game.

### DISCLOSURE OF THE INVENTION

In the conventional baseball game in which an opening demonstration video is displayed/played back, a video is displayed/played back showing two teams arbitrarily selected by a computer competing with each other as computers. Since the player therefore has no choice but to view the opening demonstration video of a competition between the two teams arbitrarily selected by the computer, it is impossible for the player to immediately view a competition with a favorite team, for example, and the player may become disinterested in viewing the opening demonstration video.

In the conventional baseball game in which an opening demonstration video is displayed/played back, a video is displayed/played back showing two teams arbitrarily selected by the computer competing with each other as computers, and a video that begins from the top of the first inning is always displayed/played back. Therefore, when a player views the opening demonstration video a number of times, even when the two teams arbitrarily selected by the computer vary, the player always views an opening demonstration video that begins from the top of the first inning, and the player may therefore become disinterested in viewing the opening demonstration video.

An object of the present invention is to maintain a high level of player interest in viewing an opening demonstration video in a game program.

In the game program according to the present invention, the opponent teams in a competition game played by a control unit are determined by operation of an operating unit of a player through an opponent team determining function; an opening demonstration video of the competition game between the opponent teams determined by the opponent team determining function is determined by the control unit through an opening demonstration video determining function; and the opening demonstration video determined by the opening demonstration video determining function is displayed/played back on a monitor by the control unit through an opening demonstration video display/playback function prior to the start of a competition game. Since the player can select any opponent teams that suit his preference by operating the operating unit, the player can select a competition between favorite or interesting teams, and the player is therefore less likely to become disinterested in viewing the opening demonstration movie.

Furthermore, in the game program according to the present invention, after a virtual competition game has been played by the control unit, a highlight scene in the virtual competition game that satisfies a predetermined highlight condition is determined from within the virtual competition game through a highlight scene determining function; an opening demonstration video that includes the highlight scene in the virtual competition game that was determined by the highlight scene determining function is determined by the control unit through an opening demonstration video determining function; and the opening demonstration video determined by the opening demonstration video determining function is displayed/played back on the monitor by the control unit through an opening demonstration video display/playback function prior to the start of a competition game. Since an opening demonstration video is displayed/played back that begins from the highlight scene, which is the scene in which the match is at the highest intensity in the virtual competition game, an opening demonstration video can be displayed/played back that is more appealing to the player than the video displayed/played back in the conventional technique, which always begins from the top of the first inning. The player is therefore less likely to become disinterested in viewing the opening demonstration movie.

### BRIEF DESCRIPTION OF THE DRAWINGS

FIG. 1 is a basic structural diagram showing the video game apparatus according to a first embodiment of the present invention;
FIG. 2 is a function block diagram showing the video game apparatus;
FIG. 3 is a television monitor view showing the title display screen;
FIG. 4 is a television monitor view showing the opponent team setting screen displayed on the title display screen;
FIG. 5 is a television monitor view showing the opponent team setting screen in which the home team is set;
FIG. 6 is a television monitor view showing the opponent team setting screen in which the visitor team is set;
FIG. 7 is a television monitor view showing the opening demonstration video display screen;
FIG. 8 is a flowchart showing the opening demonstration video playback display routine;
FIG. 9 is an opponent team setting table showing the opponent teams that can be set as the home team or visitor team;
FIG. 10 is a view corresponding to FIG. 2 that shows another embodiment;
FIG. 11 is a view corresponding to FIG. 7 that shows another embodiment, and is a television monitor view showing the opening demonstration video display screen in which the video is started from the end of the fourth inning;
FIG. 12 is a view corresponding to FIG. 8 that shows another embodiment;
FIG. 13 is a television monitor view showing the opening demonstration video display screen in which the video is started from the top of the first inning;
FIG. 14 is a television monitor view showing the opening demonstration video display screen in which the video is started from the top of the seventh inning;
FIG. 15 is a television monitor view showing a fireworks video display screen that is an event performed after a changeover at the top of the seventh inning;
FIG. 16 is a conversion table of predetermined highlight conditions for each predetermined set of innings;
FIG. 17 is a conversion table of probabilities of determining to check the start inning for each predetermined set of innings; and
FIG. 18 is a conversion table of probabilities of determining an opening demonstration playback pattern for each opening demonstration playback pattern.

### KEY

- 1: control unit
- 2: memory unit
- 7: CPU
- 12: RAM
- 17: controller
- 17b: second button
- 17D: down key
- 17L: left key
- 17R: right key
- 17R2 R2: button
- 17U: up key
- 20: television monitor
- 30: title display screen
- 31: title image display region
- 32: opponent team setting screen
- 33: home/visitor selection
- 34: opponent team selection
- 35: arrow graphic character
- 40: competition display screen
- 41: inning display region
- 42: count display region
- 43: game score display region
- 44: runner fielding status display region
- 45: changeover display screen
- 46: fireworks video display region
- 50: character display means
- 51: character action means
- 52: opponent team determining means
- 53: opening demonstration video determining means
- 54: opening demonstration video display/playback means
- 55: highlight scene determining means
- 71: pitcher character
- 72: batter character

### BEST MODE FOR CARRYING OUT THE INVENTION

### [Configuration and operation of the game apparatus]

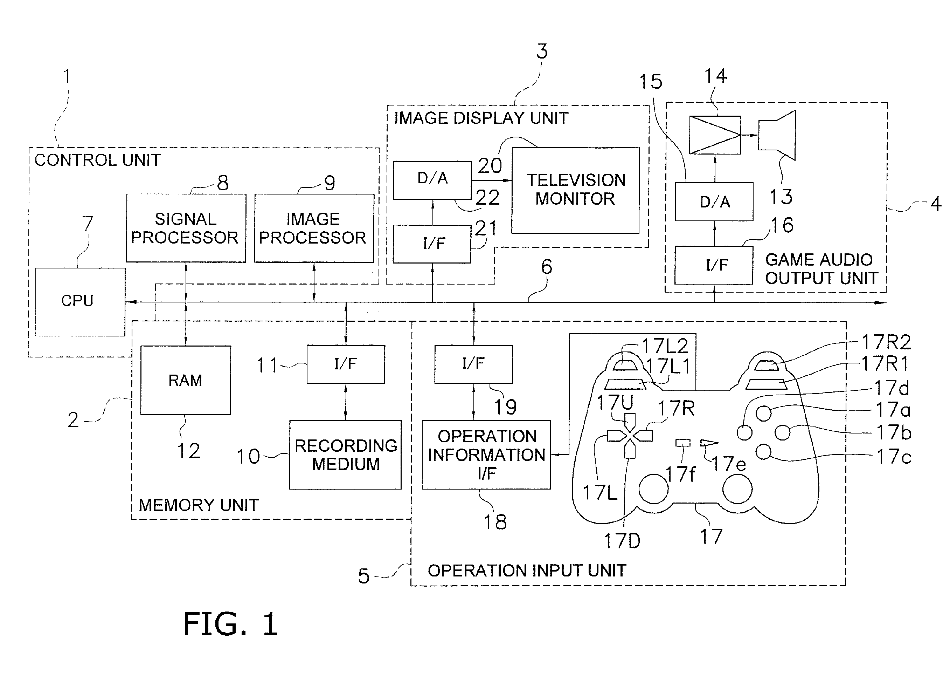

FIG. 1 shows the basic structure of the game apparatus according to an embodiment of the present invention. A home video game apparatus is described below as an example of the video game apparatus. The home video game apparatus is provided with a home game device main unit and a home television. A recording medium 10 can be mounted in the home game device main unit, and game data are read as needed from the recording medium 10 and the game is executed. In this manner, the executed game content is displayed on the home television.

A game system of a home video game apparatus is composed of a control unit 1, a memory unit 2, an image display unit 3, an audio output unit 4, and an operation input unit 5, and these are connected via a bus 6. The bus 6 includes an address bus, a data bus, a control bus, and the like. In this case, the control unit 1, memory unit 2, audio output unit 4, and operation input unit 5 are housed in the home game device main unit of the home video game apparatus, and the image display unit 3 is housed in the home television.

The control unit 1 is provided primarily for controlling the progress of the game as a whole on the basis of a game program. The control unit 1 is composed, for example, of a CPU (Central Processing Unit) 7, a signal processor 8, and an image processor 9. The CPU 7, the signal processor 8, and the image processor 9 are connected to each other via the bus 6. The CPU 7 interprets commands from the game program and performs various types of data processing or control. For example, the CPU 7 issues a command to the signal processor 8 to feed image data to the image processor. The signal processor 8 primarily performs calculations in three-dimensional space, positional conversion calculations from three-dimensional space to pseudo-three-dimensional space, light source calculation processing, and processing for generating and processing images and audio data. The image processor 9 primarily performs processing for writing image data to be drawn into RAM 12 on the basis of the calculation results and processing results of the signal processor 8.

The memory unit 2 is provided primarily for storing program data or various types of data and the like used by the program data. The memory unit 2 is composed, for example, of a recording medium 10, an interface circuit 11, and RAM (Random Access Memory) 12. The interface circuit 11 is connected to the recording medium 10. The interface circuit 11 and the RAM 12 are connected via the bus 6. The recording medium 10 is provided for storing program data of the operation system or for storing game data and the like composed of image data, audio data, and various types of program data. The recording medium 10 is a ROM (Read Only Memory) cassette, an optical disk, a flexible disk, or the like, for example, and stores operating system program data, game data, or the like. Card-type memory is also included in the recording medium 10, and the card-type memory is used primarily for storing various types of game parameters at the time of interruption when a game is interrupted. The RAM 12 temporarily stores various types of data that are read from the recording medium 10, and is used for such purposes as temporarily storing processing results from the control unit 1. Various types of data, and address data for indicating the storage position of the various types of data are stored in the RAM 12, and an arbitrary address can be specified for reading and writing.

The image display unit 3 is provided primarily for outputting an image of image data that are written in the RAM 12 by the image processor 9, image data that are read from the recording medium 10, and the like. The image display unit 3 is composed of a television monitor 20, an interface circuit 21, and a D/A converter (digital-to-analog converter) 22, for example. The D/A converter 22 is connected to the television monitor 20, and the interface circuit 21 is connected to the D/A converter 22. The bus 6 is connected to the interface circuit 21. In this arrangement, the image data are fed to the D/A converter 22 via the interface circuit 21 and converted to analog image signals. The analog image signals are outputted as an image to the television monitor 20.

In this case, the image data include polygon data, texture data, and the like, for example. Polygon data are coordinate data of the vertexes that constitute a polygon. Texture data are data for setting textures on the polygons, and are composed of texture instruction data and texture color 5 data. The texture instruction data are data for correlating a polygon and a texture, and the texture color data are data for specifying the color of a texture. In this arrangement, polygon address data and texture address data that indicate the storage positions of the data are correlated with each other in the polygon data and the texture data, respectively. In such image data, polygon data (three-dimensional polygon data) in three-dimensional space indicated by the polygon address data are subjected by the signal processor 8 to coordinate conversion and perspective projection conversion on the basis of movement amount data and rotation amount data of an image as such (perspective), and converted to polygon data (two-dimensional polygon data) in two-dimensional space. The external shape of a polygon is formed by a plurality of items of two-dimensional polygon data, and the texture data indicated by the texture address data are written in the internal region of the polygon. Objects in which textures are affixed to polygons, i.e., various types of characters, can thus be displayed.

The audio output unit 4 is provided primarily for outputting sound from audio data that are read from the recording medium 10. The audio output unit 4 is composed of a speaker 13, an amplification circuit 14, a D/A converter 15, and an interface circuit 16, for example. The amplification circuit 14 is connected to the speaker 13, the D/A converter 15 is connected to the amplification circuit 14, and the interface circuit 16 is connected to the D/A converter 15. The bus 6 is connected to the interface circuit 16. In this arrangement, the audio data are fed to the D/A converter 15 via the interface circuit 16 and converted to analog audio signals. The analog audio signals are amplified by the amplification circuit 14 and outputted as sound from the speaker 13. The audio data include ADPCM (Adaptive Differential Pulse Code Modulation) data, PCM (Pulse Code Modulation) data, or the like, for example. In the case of ADPCM data, sound can be outputted from the speaker 13 by the same processing method described above. In the case of PCM data, sound can be outputted from the speaker 13 by the same processing method described above by first converting the PCM data to ADPCM data in the RAM 12.

The operation input unit 5 is primarily composed of a controller 17, an operation information interface circuit 18, and an interface circuit 19. The operation information interface circuit 18 is connected to the controller 17, and the interface circuit 19 is connected to the operation information interface circuit 18. The bus 6 is connected to the interface circuit 19.

The controller 17 is an operation device that is used by the player to input various operating commands, and operating signals that correspond to the operations of the player are transmitted to the CPU 7. The controller 17 is provided with a first button 17a, a second button 17b, a third button 17c, a fourth button 17d, an up key 17U, a down key 17D, a left key 17L, a right key 17R, an L1 button 17L1, an L2 button 17L2, an R1 button 17R1, an R2 button 17R2, a start button 17e, a select button 17f, a left stick 17SL, and a right stick 17SR.

The up key 17U, the down key 17D, the left key 17L, and the right key 17R are used, for example, to present commands to the CPU 7 to move a character or cursor up, down, left, or right on the screen of the television monitor 20.

The start button 17e is used to instruct the CPU 7 to load the game program from the recording medium 10.

The select button 17f is used to specify various selections to the CPU 7 for the game program that is loaded from the recording medium 10.

The left stick 17SL and the right stick 17SR are stick-type controllers having substantially the same structure as a so-called joystick. The stick-type controllers have an upright stick. The stick is configured so as to be capable of tilting from the upright position through 360° of directions that include forward, backward, left, and right with respect to a center support point. The left stick 17SL and the right stick 17SR transmit the values of an x coordinate and a y coordinate as an operation signal using the upright position as the origin according to the tilt direction and tilt angle of the sticks to the CPU 7 via the operation information interface circuit 18 and the interface circuit 19.

Various types of functions are assigned to the first button 17a, the second button 17b, the third button 17c, the fourth button 17d, the L1 button 17L1, the L2 button 17L2, the R1 button 17R1, and the R2 button 17R2 according to the game program that is loaded from the recording medium 10.

The buttons and keys of the controller 17 other than the left stick 17SL and the right stick 17SR are on/off switches that are switched on by being pushed from the center position by outside pressure and switched off by returning to the center position when pressure is withdrawn.

The overall operation of the home video game apparatus configured as described above will next be described. When the power supply switch (not shown) is turned on to supply electrical power to the game system 1, the CPU 7 reads image data, audio data, and program data from the recording medium 10 on the basis of the operating system stored in the recording medium 10. Some or all of the image data, audio data, and program data thus read is stored in the RAM 12. The CPU 7 then issues a command for the image data or audio data stored in the RAM 12 on the basis of the program data that are stored in the RAM 12.

In the case of image data, the signal processor 8 first performs position calculations, light source calculations, and the like of a character in three-dimensional space on the basis of the command from the CPU 7. The image processor 9 then performs write processing and the like of image data to be drawn into the RAM 12 on the basis of the calculation results of the signal processor 8. The image data written in the RAM 12 are then fed to the D/A converter 22 via the interface circuit 21. The image data are converted to analog video signals by the D/A converter 22. The image data are fed to the television monitor 20 and displayed as an image.

In the case of audio data, the signal processor 8 first performs processing for generating and processing audio data on the basis of a command from the CPU 7. In this case the audio data are processed to convert pitches, add noise, set envelopes, set levels, add reverb, and perform other processing, for example. The audio data are then outputted from the signal processor 8 and fed to the D/A converter 15 via the interface circuit 16. The audio data are converted to analog audio signals. The audio data are then outputted from the speaker 13 via the amplification circuit 14 as sound.

### [Overview of various routines in the game apparatus]

The game implemented in the present game device is a baseball game, for example. The particular baseball game is capable of pennant mode play in which a baseball team selected by a player competes with another baseball team over the course of a year. In the pennant mode, a main competition is played that is a competition with the baseball team selected by the player, and a secondary competition is played virtually by the CPU 7 in parallel during the same period of time as the main competition. The main competition is displayed on the television monitor 20, and a game can actually be played by the player operating the controller 17. The secondary competition is a competition between other baseball teams that are not selected by the player, and because the secondary competition is executed by the CPU 7 in virtual fashion and during the same time period as the main competition, the secondary competition is not displayed on the television monitor 20.

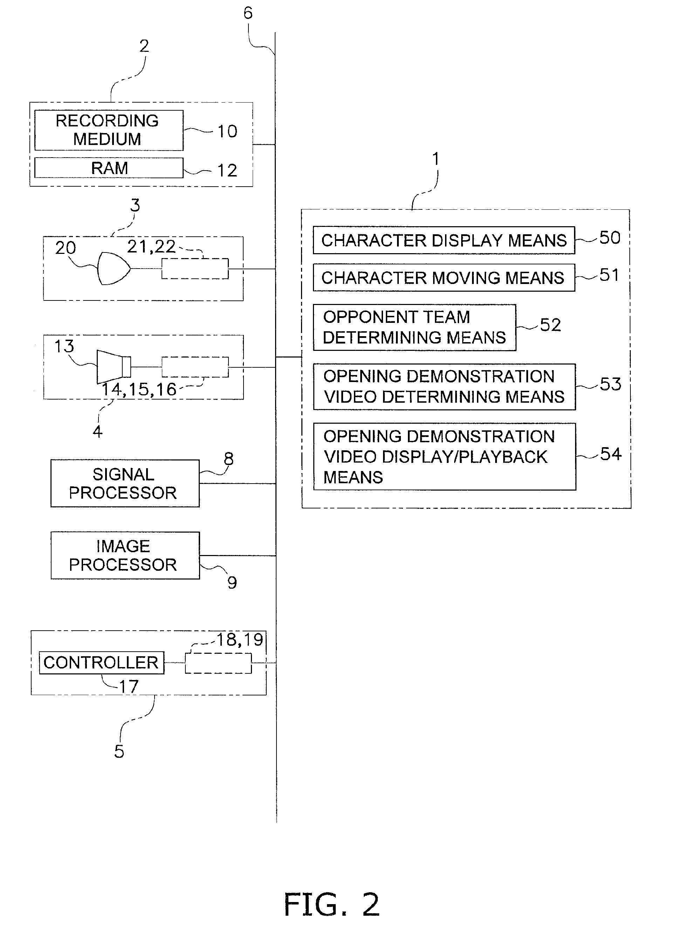

The game device is capable of executing a game in which a character displayed on the television monitor 20 is moved by operating the controller 17. FIG. 2 is a functional block diagram showing the functions that fulfill main roles in the present invention. The control unit 1 primarily comprises character display means 50, character moving means 51, opponent team determining means 52, opening demonstration video determining means 53, and opening demonstration video display/playback means 54.

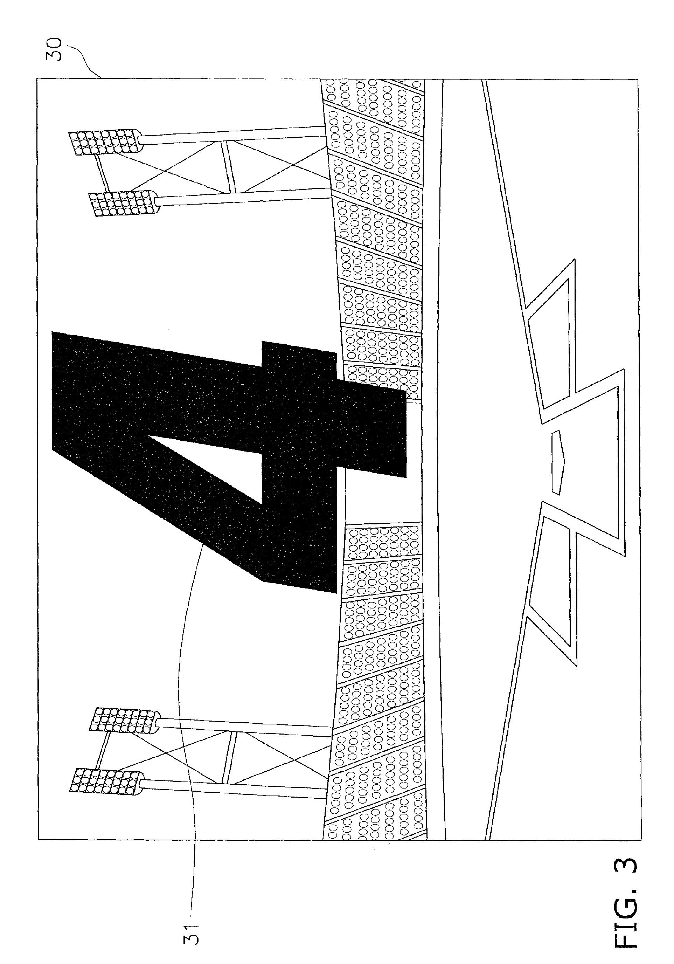

The character display means 50 is provided with a function for displaying a pitcher character 71 and a batter character 72 on the television monitor 20. The pitcher character 71 and the batter character 72 shown in FIG. 3 are displayed on the television monitor 20 by the character display means 50.

In this means, pitcher image data corresponding to the pitcher character 71, and batter image data corresponding to the batter character 72 are fed to the RAM 12 from the memory unit 2, e.g., the recording medium 10, and stored in the RAM 12 when the game program is loaded. At this time, the pitcher image data and pitcher coordinate data are recognized by the control unit 1, e.g., the CPU 7. Batter image data and batter coordinate data for displaying the batter image data on the television monitor 20 are also fed to the RAM 12 from the memory unit 2, e.g., the recording medium 10, and stored in the RAM 12. At this time, the batter image data and the batter coordinate data are recognized by the control unit 1, e.g., the CPU 7. The batter image data and pitcher image data stored in the RAM 12 are then fed to the television monitor 20 via the image processor 9 on the basis of an instruction from the CPU 7. The batter image data and pitcher image data are displayed in predetermined positions of the television monitor 20 on the basis of the batter coordinate data and pitcher coordinate data, respectively. Instructions for displaying the batter image data and pitcher image data in predetermined positions of the television monitor 20 are issued by the CPU 7.

The character moving means 51 is provided with a function for moving the pitcher character 71 and the batter character 72. The pitcher character 71 and the batter character 72 are moved by the character moving means 51.

In this means, when a signal for moving the pitcher character 71 and the batter character 72 is recognized by the control unit 1, e.g., the CPU 7, the pitcher image data corresponding to the pitcher character 71 and the batter image data corresponding to the batter character 72 are processed by the control unit 1, e.g., the signal processor 8 and the image processor 9, on the basis of an instruction from the CPU 7. The processed image data are then fed from the RAM 12 to the television monitor 20, and the pitching movement of the pitcher character 71 and the swinging movement of the batter character 72 are displayed on the television monitor 20 as a moving image.

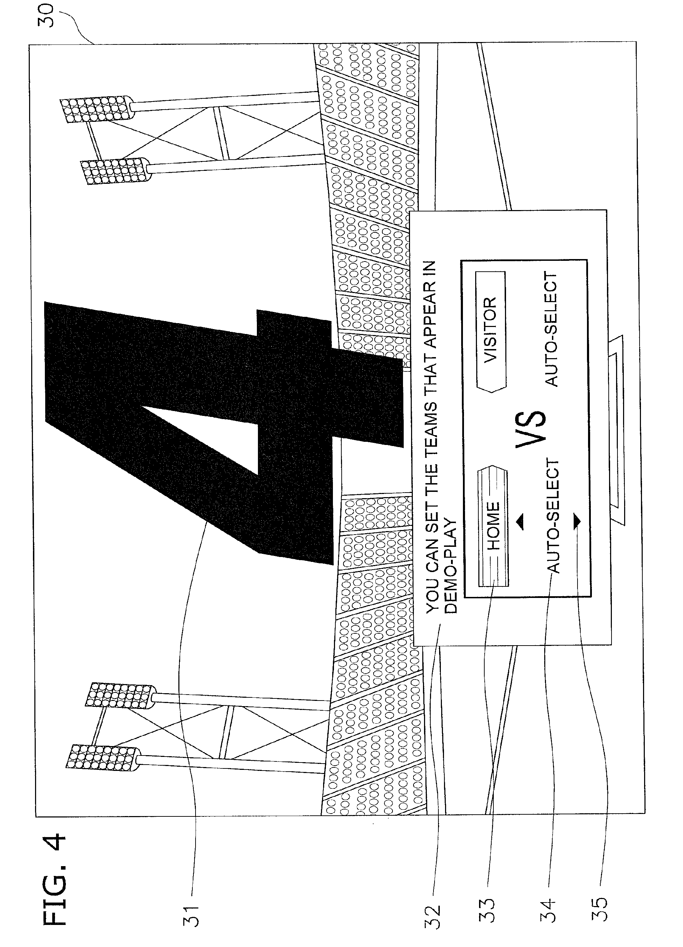

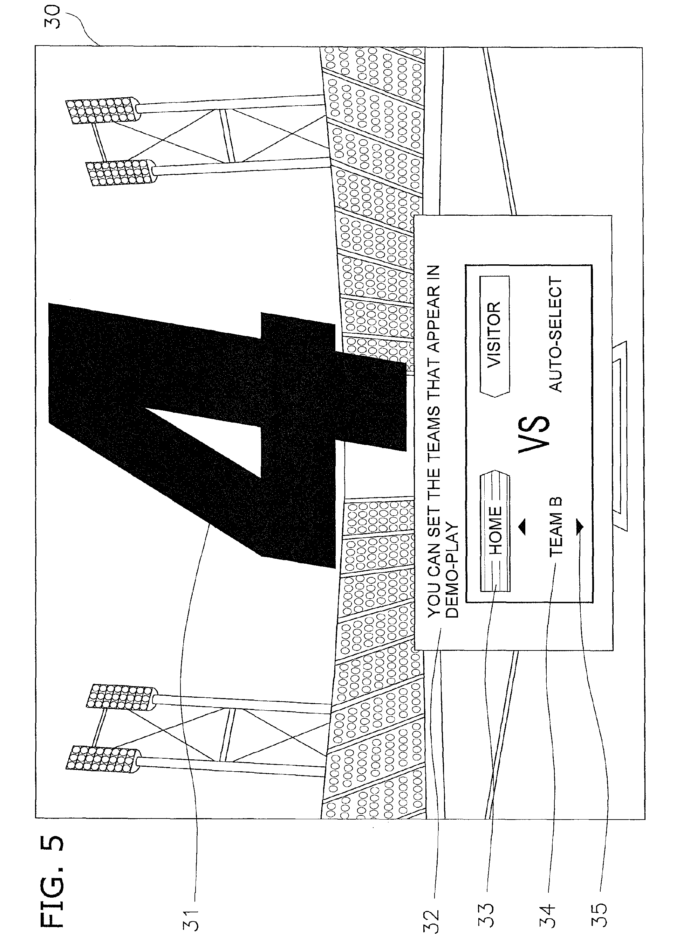

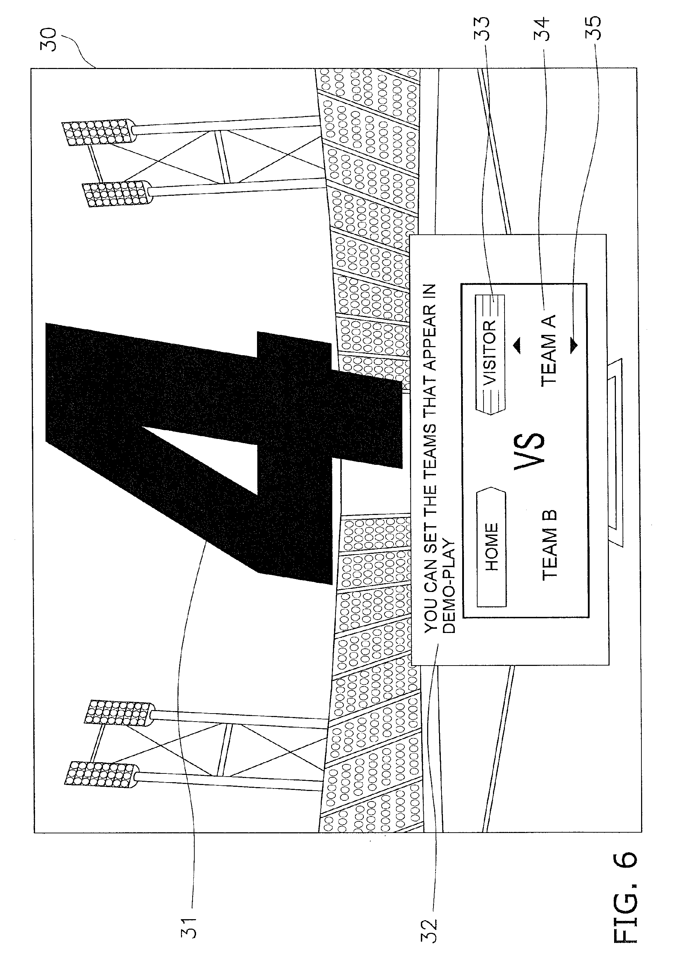

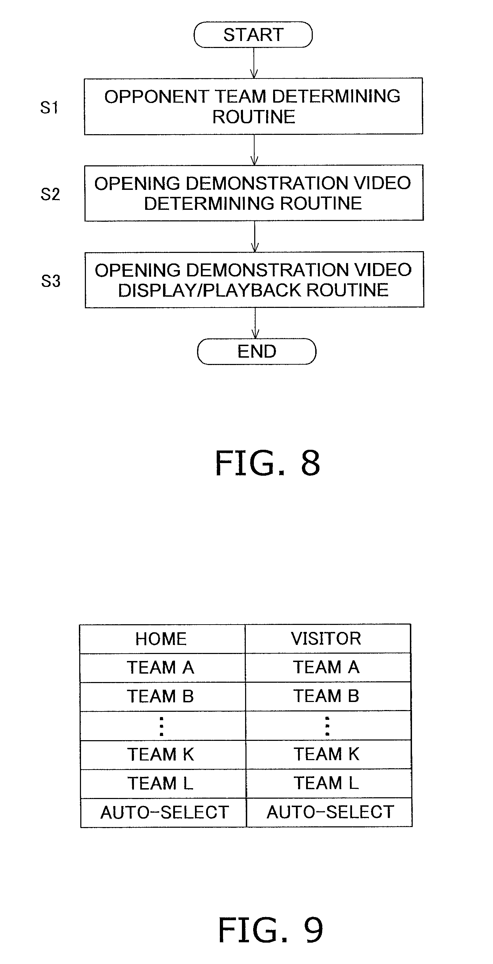

The opponent team determining means 52 is provided with a function for determining the opponent teams in the competition game played by the CPU 7, by operation of the controller 17 of the player. The opponent teams in the competition game played by the CPU 7 are determined by the opponent team determining means 52 through operation of the controller 17 of the player. The opening demonstration video of the competition game played by the CPU 7 is a movie showing what the baseball game looks like when actually being played, and is displayed/played back before the player begins a competition with another player or computer. An arbitrary opponent team that suits the player's preference can be selected by the player operating the controller 17. Specifically, in the title display screen 30 shown in FIG. 3, the opponent team setting screen 32 shown in FIG. 4 is displayed when the player presses the R2 button 17R2 of the controller 17. Through the opponent team setting screen 32, the player can arbitrarily select the home and visitor opponent teams, "home" and "visitor" in the home/visitor selection 33 can be selected by operating the left key 17L and the right key 17R of the controller 17, and any of the twelve teams made up of "Team A," "Team B," ..., "Team K," and "Team L," and the computer auto setting "auto-select" in the opponent team selection 34 can be selected for the "home" and "visitor" of the home/visitor selection 33 by operating the up key 17U and the down key 17D of the controller 17. The opponent teams to be the "Team A," "Team B," ..., "Team K," and "Team L," and "auto-select" in the opponent team selection 34 for the "home" and "visitor" of the home/visitor selection 33 are determined by an opponent team setting table shown in FIG. 9 that is stored in advance in the memory unit 2. The same opponent team cannot be selected for "home" and "visitor" of the home/visitor selection 33 from the non-"auto-select" options "Team A," "Team B," ..., "Team K," and "Team L" of the opponent team selection 34. Two opponent teams can be selected by the player operating the controller 17 from among the options "Team A," "Team B," ..., "Team K," and "Team L," and "auto-select" in the opponent team selection 34 for the "home" and "visitor," respectively, of the home/visitor selection 33, but one or both of "home" and "visitor" in the home/visitor selection 33 may be fixed to "auto-select." In this arrangement, when the R2 button 17R2 of the controller 17 is first pushed in the title display screen 30 shown in FIG. 3 at the beginning, the opponent team setting screen 32 shown in FIG. 4 shows a state in which "auto-select," "auto-select" is set in the opponent team selection 34 for each of "home" and "visitor" in the home/visitor selection 33. A highlight color is then displayed to indicate that "home" in the home/visitor selection 33 can be selected, arrow graphic characters 35 are displayed above and below "auto-select" of the opponent team selection 34 for "home" of the home/visitor selection 33, and displaying the arrow graphic characters 35 indicates that the opponent team selection 34 can be changed. By operating the up key 17U and the down key 17D of the controller 17, "Team B" of the opponent team selection 34 is selected for "home" of the home/visitor selection 33, as shown in FIG. 5. When the highlight color is displayed to indicate that "visitor" of the home/visitor selection 33 can be selected by operating the left key 17L and the right key 17R of the controller 17, the arrow graphic characters 35 are displayed above and below the "auto-select" entry of the opponent team selection 34 for "visitor" of the home/visitor selection 33, to indicate that the opponent team selection 34 can be changed. In this state, "Team A" of the opponent team selection 34 is selected for "visitor" of the home/visitor selection 33, as shown in FIG. 6, by operating the up key 17U and down key 17D of the controller 17. When the player sets the opponent teams so that "home" is "Team B," and "visitor" is "Team A" as shown in FIG. 6, the player sets "home" to "Team B" and "visitor" to "Team A" by pressing the second button 17b and other determining buttons of the controller 17. In this arrangement, the opponent teams determined by the opponent team determining means 52 are stored in the RAM 12 as various types of data that include the information that "home" is "Team B" and "visitor" is "Team A."

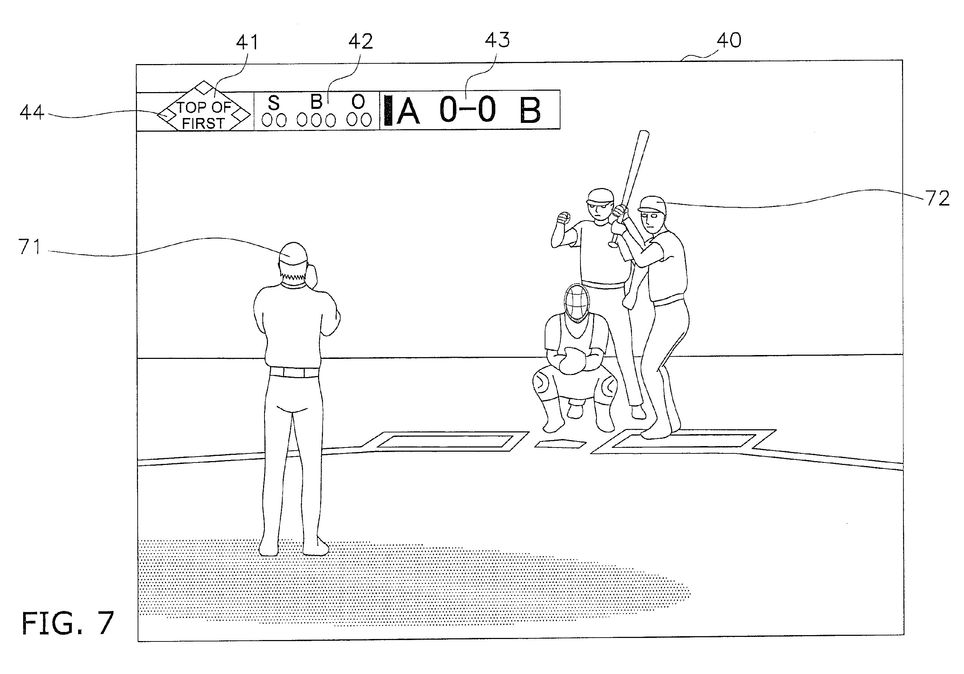

The opening demonstration video determining means 53 is provided with a function for determining, through the use of the CPU 7, an opening demonstration video of the opponent team that is the opponent of the opponent team determined by the opponent team determining means 52. Through the opening demonstration video determining means 53, the CPU 7 determines the opening demonstration video of the opponent team that is the opponent of the opponent team determined by the opponent team determining means 52. When the opponent teams determined by the opponent team determining means 52 are such that "home" is "Team B" and "visitor" is "Team A," the portion displayed/played back as the opening demonstration video is determined by the CPU 7 as an arbitrary portion of a competition game played when the visitor is Team A and the home is Team B; i.e., the opening demonstration video shown in FIG. 7 is determined that shows a competition game from the top of the first inning when Team A and Team B are competing. By the opening demonstration video determining means 53, various types of data are stored in the RAM 12 that include information indicating that the portion displayed/played back as the opening demonstration video from a competition game when the visitor Team A and the home Team B are competing is an opening demonstration video of the competition game from the top of the first inning.
The opening demonstration video display/playback means 54 is provided with a function whereby the opening demonstration video determined by the opening demonstration video determining means 53 is displayed/played back on the television monitor 20 by the CPU 7 prior to the start of a competition game. Through the opening demonstration video display/playback means 54, the opening demonstration video determined by the opening demonstration video determining means 53 is displayed/played back on the television monitor 20 by the CPU 7 prior to the start of a competition game. In this arrangement, the opening demonstration video determined by the opening demonstration video determining means 53 that shows a competition game from the top of the first inning when Team A is the visitor and Team B is the home as shown in FIG. 7 is displayed/played back in a competition display screen 40 on the television monitor 20 by the opening demonstration video display/playback means 54.

In this game program, the opponent teams in the competition game played by the CPU 7 are determined by operation of the controller 17 of the player by the opponent team determining means 52, the opening demonstration video of the competition game that is a competition between the opponent teams determined by the opponent team determining means 52 is determined by the CPU 7 by the opening demonstration video determining means 53, and the opening demonstration video determined by the opening demonstration video determining means 53 is displayed/played back on the monitor by the CPU 7 by the opening demonstration video display/playback means 54 prior to the start of a competition game. Specifically, by the opponent team determining means 52, the opponent teams are determined by operation of the controller 17 of the player such that Team A is the visitor and Team B is the home. Then, by the opening demonstration video determining means 53, the portion displayed/played back as the opening demonstration video is determined to be an opening demonstration video of a competition game from the top of the first inning when Team A and Team B determined by the opponent team determining means 52 are competing. Then, by the opening demonstration video display/playback means 54, the opening demonstration video determined by the opening demonstration video determining means 53 of a competition game from the top of the first inning when Team A and Team B are competing is displayed/played back on the television monitor 20 prior to the start of a competition game. Since the player can select any opponent teams that suit his preference by operating the controller 17, the player can select a competition between favorite or interesting teams. Consequently, an opening demonstration video can be displayed/played back that is appealing to the player, and the player is therefore less likely to become disinterested in viewing the opening demonstration movie than in the case of the conventional technique, in which the player has no choice but to view an opening demonstration video of a competition between two teams that are arbitrarily selected by a computer.

### [Overview of the television monitor display screens in the baseball game]

The specific details of the display screens displayed on the television monitor 20 in the baseball game will next be described using the title display screen 30 shown in FIG. 3, and the title display screens 30 shown in FIGS. 4 through 6.

In the present baseball game, when the game is started, the title display screen 30 for displaying the title of the game is first displayed on the television monitor 20, as shown in FIG. 3. The title display screen 30 shown in FIG. 3 has a title image display region 31 in which a large "4" is displayed in the center of the screen, and the "4" indicates the title of the baseball game. In the title display screen 30 shown in FIG. 3, the opponent team setting screens 32 shown in FIGS. 4 through 6 are displayed on the title display screen 30 when the player presses the R2 button 17R2 of the controller 17.

As shown in FIGS. 4 through 6, the opponent team setting screen 32 is a rectangular screen that is displayed as a popup at the bottom of the title image display region 31 in the title display screen 30, and is a screen that enables the player to select any opponent team as the home and visitor by operating the controller 17. At the top of the opponent team setting screen 32, text characters are displayed that read, "You can set the teams that appear in demo-play," and the home/visitor selection 33 for selecting "home" and "visitor," and the opponent team selection 34 that shows the opponent teams corresponding to "home" and "visitor" of the home/visitor selection 33 are displayed below the text characters.

As shown in FIGS. 4 through 6, the "home" and "visitor" text characters in the home/visitor selection 33 are enclosed by substantially rectangular graphic characters, and a highlight color is displayed that indicates that "home" or "visitor" has been selected by operating the left key 17L and right key 17R of the controller 17. The highlight color is displayed on "home" in FIGS. 4 and 5, and the highlight color is displayed on "visitor" in FIG. 6. The arrow graphic characters 35 are displayed above and below the opponent team selection 34 on the side on which the highlight color is displayed, and the displaying of the arrow graphic characters 35 indicates that the opponent team selection 34 can be changed. The arrow graphic characters 35 are displayed on the "home" side in FIGS. 4 and 5, and the arrow graphic characters 35 are displayed on the "visitor" side in FIG. 6. The opponent teams to be the "Team A," "Team B," ..., "Team K," "Team L," and "auto-select" of the opponent team selection 34 for the "home" and "visitor" of the home/visitor selection 33 are determined by the opponent team setting table shown in FIG. 9 that is stored in advance in the memory unit 2. The same opponent team cannot be selected for "home" and "visitor" of the home/visitor selection 33 from the non-"auto-select" options "Team A," "Team B," ..., "Team K," and "Team L" of the opponent team selection 34.

Text characters for each of the twelve teams "Team A," "Team B," . . ., "Team K," and "Team L," and for the computer auto setting "auto-select" are displayed in the opponent team selection 34 as shown in FIGS 4 through 6, and one team each can be set for "home" and "visitor" by operating the up key 17U and the down key 17D of the controller 17. In FIG. 4, "auto-select" and "auto-select" are set in the opponent team selection 34 for "home" and "visitor," respectively, of the home/visitor selection 33. In FIG. 5, "Team B" and "auto-select" are set in the opponent team selection 34 for "home" and "visitor," respectively, of the home/visitor selection 33. In FIG. 6, "Team B" and "Team A" are set in the opponent team selection 34 for "home" and "visitor," respectively, of the home/visitor selection 33.

Such operations as the following are performed by operating the controller 17 of the player in the title display screen 30 shown in FIG. 3, and in the title display screens 30 shown in FIGS. 4 through 6. First, in the title display screen 30 shown in FIG. 3, when the R2 button 17R2 of the controller 17 is first pressed, a state occurs in which "auto-select" and "auto-select" are set in the opponent team selection 34 for "home" and "visitor," respectively, of the home/visitor selection 33 in the opponent team setting screen 32 shown in FIG. 4. The highlight color is then displayed to indicate that "home" in the home/visitor selection 33 can be selected, the arrow graphic characters 35 are displayed above and below "auto-select" of the opponent team selection 34 for "home" of the home/visitor selection 33, and displaying the arrow graphic characters 35 indicates that the opponent team selection 34 can be changed. By operating the up key 17U and the down key 17D of the controller 17, "Team B" of the opponent team selection 34 is selected for "home" of the home/visitor selection 33, as shown in FIG. 5.

The specific details of the display screens displayed on the television monitor 20 in the baseball game will next be described using the competition display screen 40 shown in FIG. 7.

In the present baseball game, the control unit 1 moves the pitcher character 71 and executes a game in which a ball object pitched by the pitcher character 71 is hit back by operation of a meet cursor of the batter character 72 by the player, as shown in FIG. 7. In such a baseball game, the competition display screen 40 shown in FIG. 7 is displayed when the player standing at the vantage point of the batter character 72 hits back the ball object pitched by the pitcher character 71.

The main parts of the competition display screen 40 are the pitcher character 71 positioned at the lower part of the screen, and the batter character 72 positioned at the upper part of the screen, as shown in FIG. 7. When a command for moving the batter character 72 is issued from the control unit 1 on the basis of the game program, the action of the pitcher character 71 and batter character 72 is displayed on the television monitor 20 by continuously moving image data, i.e., polygon data, that correspond to the pitcher character 71 and batter character 72.

The competition display screen 40 also has an inning display region 41 positioned at the upper left of the screen, a count display region 42 positioned to the right of the inning display region 41 in the upper part of the screen, a game score display region 43 positioned to the right of the count display region 42 in the upper part of the screen, and a runner fielding status display region 44 on the periphery of the inning display region 41 at the upper left of the screen, as shown in FIG. 7.

The current inning number is displayed in the inning display region 41, and the text characters "top of first" are displayed in FIG. 7. The text characters S, B, and O indicating the strike count, the ball count, and the out count, respectively, are displayed from left to right in the count display region 42, and two, three, and two circle graphic characters indicating the count numbers are displayed from top to bottom below the text characters S, B , and O, respectively. In FIG. 7, the 0, 0, 0 circle graphic characters from left to right of the circle graphic characters below the text characters S, B, and O are displayed in the colors yellow, green, and red, thereby indicating "0 strikes, 0 balls, 0 outs." Text characters indicating the opponent team names, text characters indicating the score, and a rectangular graphic character indicating the current offensive team are displayed in the game score display region 43, and the display in FIG. 7 indicates that "the visitor Team A has a score of 0, the home Team B has a score of 0, and the current offensive team is Team B." A substantially fan-shaped graphic character resembling the field is displayed in the runner fielding status display region 44, and the runner status or fielding status is indicated by the position of a runner character or fielder character. Since two rectangular runner characters are not displayed in FIG. 7, the indicated runner status is "none."

### [Processing flow during execution of the opening demonstration video playback/display system in the baseball game]

The opening demonstration video playback/display system in the baseball game of the present embodiment will be described using the flowchart of FIG. 8.

First, as shown in FIG. 8, an opponent team determining routine is executed for determining the opponent teams in the competition game played by the CPU 7 (S1).

In the opponent team determining routine of step S1, the opponent teams in the competition game played by the CPU 7 are determined by operation of the controller 17 by the player. Specifically, in the opponent team determining routine of step S1, when the R2 button 17R2 of the controller 17 is first pressed in the title display screen 30 shown in FIG. 3, a state occurs in which "auto-select" and "auto-select" are set in the opponent team selection 34 for "home" and "visitor," respectively, of the home/visitor selection 33 in the opponent team setting screen 32 shown in FIG. 4. By operating the up key 17U and the down key 17D of the controller 17, "Team B" of the opponent team selection 34 is selected for "home" of the home/visitor selection 33, as shown in FIG. 5. By then operating the left key 17L and the right key 17R of the controller 17, the highlight color is displayed to indicate that "visitor" of the home/visitor selection 33 can be selected, whereupon the arrow graphic characters 35 indicating that the opponent team selection 34 can be changed are displayed above and below "auto-select" of the opponent team selection 34 for "visitor" of the home/visitor selection 33. In this state, "Team A" of the opponent team selection 34 is selected for "visitor" of the home/visitor selection 33 as shown in FIG. 6, by operating the up key 17U and the down key 17D of the controller 17. When the player has set the opponent teams so that "Team B" is "home" and "Team A" is "visitor," as shown in FIG. 6, the player presses the second button 17b or other determining button of the controller 17, and a determination is thereby made that "Team B" is "home" and "Team A" is "visitor" in the competition game. When the opponent teams are determined in the opponent team determining routine of step S1, the process proceeds to an opening demonstration video determining routine for determining the opening demonstration video (S2).

In the opening demonstration video determining routine of step S2, an opening demonstration video of the competition game between the opponent teams determined by the opponent team determining routine of step S1 is determined by the CPU 7. Specifically, in the opening demonstration video determining routine of step S2, when the opponent teams determined by the opponent team determining routine of step S1 are such that "home" is "Team B" and "visitor" is "Team A," the portion displayed/played back as the opening demonstration video is determined by the CPU 7 as an arbitrary portion of a competition game played when the visitor is Team A and the home is Team B; i.e., the opening demonstration video shown in FIG. 7 is determined that shows a competition game from the top of the first inning when Team A and Team B are competing. When a portion of a game is determined as the opening demonstration video in the opening demonstration video determining routine of step S2, the process proceeds to an opening demonstration video display/playback routine for displaying/playing back the opening demonstration video (S3).

In the opening demonstration video display/playback routine of step S3, the opening demonstration video determined by the opening demonstration video determining routine of step S2 is displayed/played back on the television monitor 20 by the CPU 7 prior to the start of a competition game. Specifically, in the opening demonstration video display/playback routine of step S3, the opening demonstration video determined by the opening demonstration video determining routine of step S2 that shows a competition game from the top of the first inning when Team A and Team B are competing as shown in FIG. 7 is displayed/played back in the competition display screen 40 on the television monitor 20.
Through the opponent team determining routine of step S1, the opponent teams in the competition game played by the CPU 7 are determined by operation of the controller 17 of the player. Through the opening demonstration video determining routine of step S2, the opening demonstration video of the competition game that is the competition game determined by the opponent team determining routine of step S1 is determined by the CPU 7. Through the opening demonstration video display/playback routine of step S3, the opening demonstration video determined by the opening demonstration video determining routine of step S2 is displayed/played back on the monitor by the CPU 7 prior to the start of a competition game. Specifically, through the opponent team determining routine of step S1, the opponent teams are determined to be Team A as the visitor and Team B as the home by operation of the controller 17 of the player. Then, through the opening demonstration video determining routine of step S2, the portion to be displayed/played back as the opening demonstration video is determined to be an opening demonstration video of a competition game from the top of the first inning when Team A and Team B determined by the opponent team determining routine of step S1 are competing. Then, through the opening demonstration video display/playback routine of step S3, the opening demonstration video determined by the opening demonstration video determining routine of step S2 that shows the competition game from the top of the first inning when Team A and Team B are competing is displayed/played back on the television monitor 20 prior to the start of a competition game. Since the player can select any opponent teams that suit his preference by operating the controller 17, the player can select a competition between favorite or interesting teams. Consequently, an opening demonstration video can be displayed/played back that is appealing to the player, and the player is therefore less likely to become disinterested in viewing the opening demonstration movie than in the case of the conventional technique, in which the player has no choice but to view an opening demonstration video of a competition between two teams that are arbitrarily selected by a computer.

### [Other embodiments]

(a) In the aforementioned embodiment, a home video game apparatus was used as an example of a computer to which the game program can be applied, but the game apparatus is not limited to the embodiment described above. The present invention can also be applied in the same manner to a game apparatus in which the monitor is provided separately, a game apparatus in which the monitor is integrated, a personal computer or workstation for functioning as the game apparatus by executing the game program, or the like.

(b) The present invention also includes a program for executing a game such as the one described above, a program method for executing a game such as the one described above, and a computer-readable recording medium in which the program is stored. Examples of the recording medium other than a cartridge include computer-readable flexible disks, semiconductor memory, CD-ROM, DVD, MO, ROM cassettes and other media.

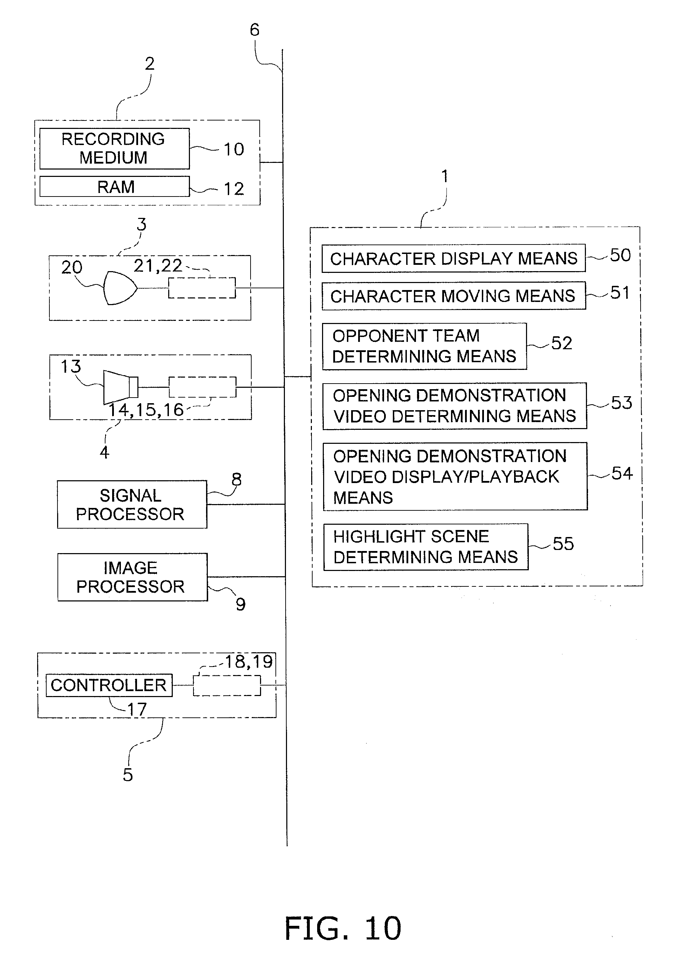

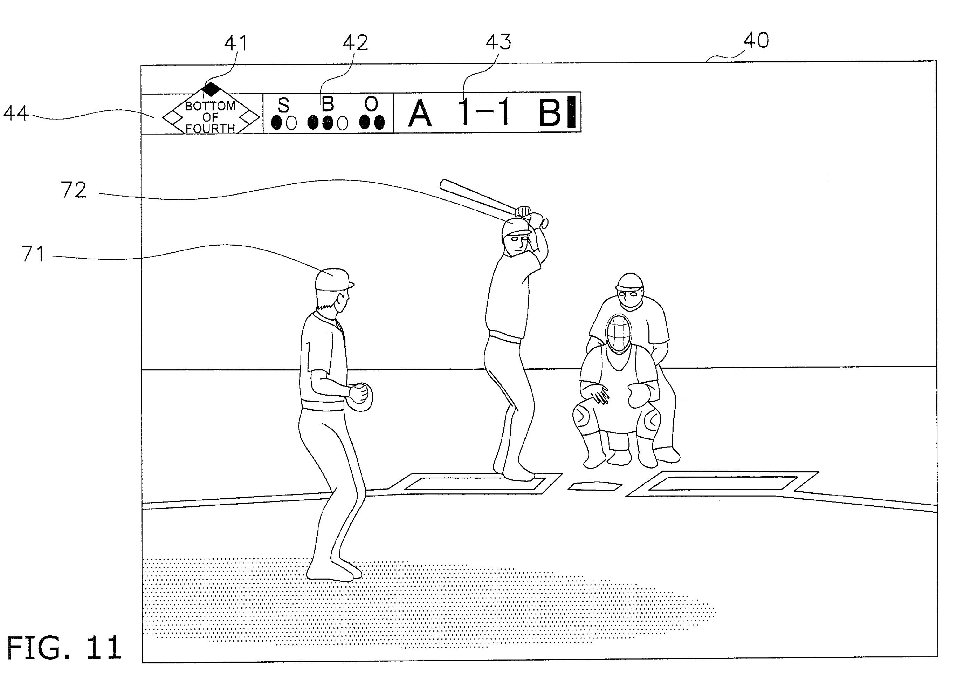

(c) In the opening demonstration video determining means 53 in the aforementioned embodiment, an arbitrary portion is determined by the CPU 7 as the portion to be displayed/played back as the opening demonstration video from a competition game between Team A as the visitor and Team B as the home. However, a configuration may also be adopted in which a highlight scene determining means 55 (see FIG. 10) is furthermore provided for determining a highlight scene in a virtual competition game, the highlight scene satisfying a predetermined highlight condition from the virtual competition game, after a virtual competition game has been played that is played in virtual fashion by the CPU 7 before the start of the competition game and not displayed on the television monitor 20; an opening demonstration video is determined that includes the highlight scene in the virtual competition game determined by the highlight scene determining means 55; and through the opening demonstration video display/playback means 54, an opening demonstration video is displayed/played back that begins from a ball count of 0 strikes, 0 balls when the batter character 72 makes a hit when the ball count is 1 strike, 2 balls in the scene shown in FIG. 11, in which the score is tied and a runner is on second base (scoring position) at the bottom of the fourth inning.

FIG. 10 is a diagram that corresponds to FIG. 2 of the aforementioned embodiment, but only the components that differ from those of the aforementioned embodiment will be described, these being the highlight scene determining means 55, the opening demonstration video determining means 53, and the opening demonstration video display/playback means 54. The other components are the same as in the aforementioned embodiment, and no detailed description thereof will be given.

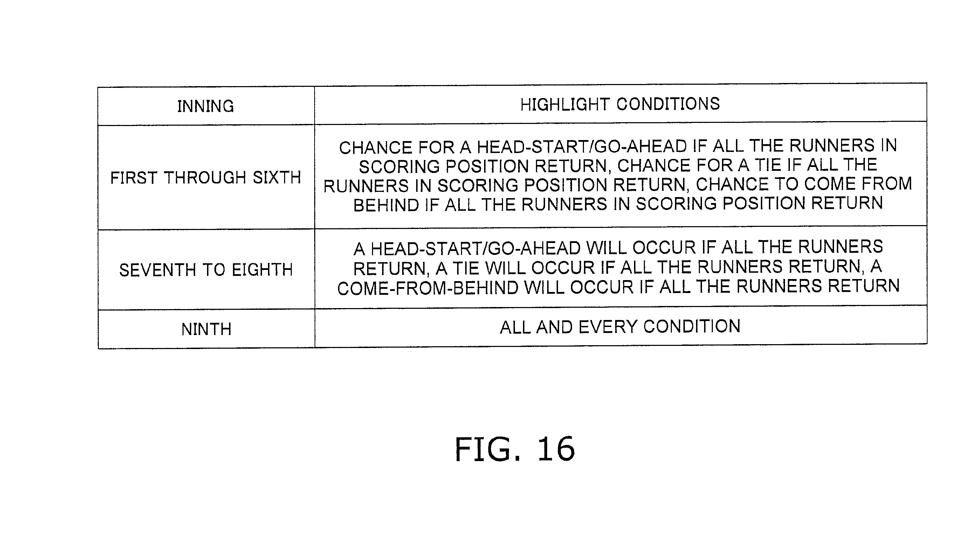

The highlight scene determining means 55 is provided with a function for determining a highlight scene in a virtual competition game that satisfies a predetermined highlight condition from within the virtual competition game after the virtual competition game has been played by the CPU 7.
Through the highlight scene determining means 55, after a virtual competition game has been played by the CPU 7, a highlight scene in the virtual competition game that satisfies a predetermined highlight condition is determined from within the virtual competition game. The term "virtual competition game" refers to a competition game not displayed on the television monitor 20, that is played in virtual fashion by the CPU 7 prior to an actual competition game between the player and another player or the CPU 7, and is played only in order to determine a highlight scene. The highlight scene in the virtual competition game is the scene in which the match is at the highest intensity in the virtual competition game, and examples thereof include such scenes as the batter character 72 making a decisive hit that determines the outcome of the match, or the pitcher character 71 striking out the batter when a runner is in scoring position and saving the game. The highlight scene is also a video that is played back for a predetermined time, e.g., 1 minute to 1 minute 30 seconds, that satisfies a predetermined highlight condition. The "predetermined highlight condition" is a condition for determining the highlight scene in a virtual competition game, and is a condition that relates to game development of the virtual competition game that is determined by a conversion table for predetermined highlight conditions for each predetermined inning that is stored in advance in table form in the memory unit 2 and shown in FIG. 16. Specifically, as shown in FIG. 16, the conditions for becoming the highlight scene in the virtual competition game are as follows: "Chance for a head-start/go-ahead if all the runners in scoring position return," "Chance for a tie if all the runners in scoring position return," and "Chance to come from behind if all the runners in scoring position return" when the inning is "first through sixth;" "A head-start/go-ahead will occur if all the runners return," "A tie will occur if all the runners return," and "A come-from-behind will occur if all the runners return" when the inning is "seventh to eighth;" and "All and every condition" when the inning is "ninth." A flag for the highlight scene is activated when a condition is met. Specifically, when the virtual competition game has the scene shown in FIG. 11 in which the score is tied and a runner is on second base (scoring position) in offense at the bottom of the fourth inning, since a hit by the batter character 72 would result in the second-base runner returning to base and one team being ahead 2 to 1, the conditions "Chance for a head-start/go-ahead if all the runners in scoring position return" and "Chance to come from behind if all the runners in scoring position return" are satisfied when the inning is "first through sixth," and the scene in which the score is 1 to 1 and a runner is on second base (scoring position) in offense at the bottom of the fourth inning is determined as the highlight scene in the virtual competition game by the highlight scene determining means 55.

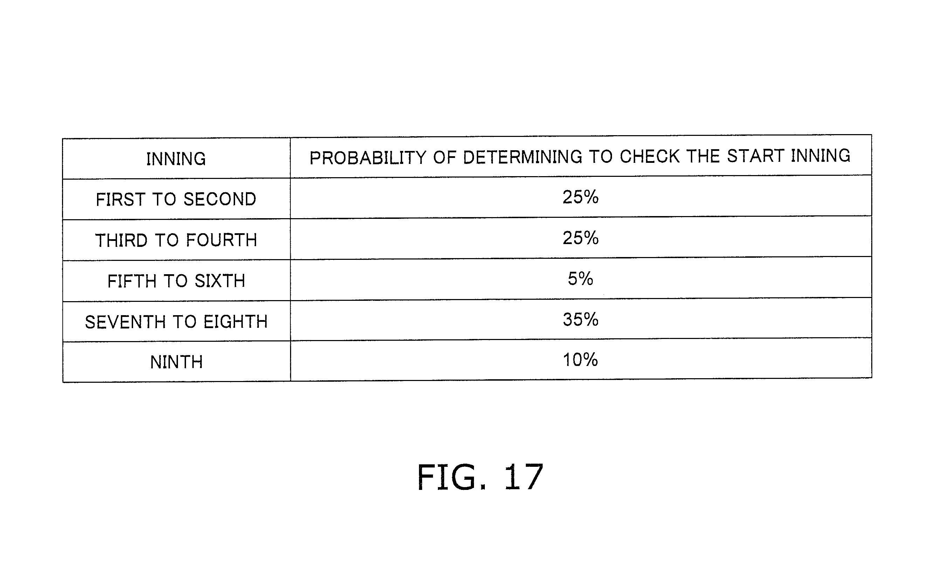

The highlight scene determining means 55 is also configured so that when the CPU 7 determines which inning is in effect, a probability value is used that corresponds to the conversion table shown in FIG. 17 of probabilities of determining to check the start inning for each predetermined inning. Specifically, as shown in FIG. 17, when the inning is "first to second," the probability of determining to check the start inning is "25%." When the inning is "third to fourth," the probability of determining to check the start inning is "25%." When the inning is "fifth to sixth," the probability of determining to check the start inning is "5%." When the inning is "seventh to eighth," the probability of determining to check the start inning is "35%." When the inning is "ninth," the probability of determining to check the start inning is "10%." In this arrangement, a low probability is set for the "fifth to sixth" innings, in which the game intensity is unlikely to increase in an actual baseball game, and a high probability is set for the "seventh to eighth" innings, which are likely to have a high intensity in an actual baseball game. A realistic highlight scene is thereby more likely to be determined. In this arrangement, a scene in which the score is tied 1 to 1 and a runner is on second base (scoring position) is selected as the highlight scene in offense at the bottom of the fourth inning, in a state in which the probability of determining to check the start inning is "25%," the inning is determined to be "third to fourth," and in the interval from "third to fourth," there is no scene in the third inning that can be the highlight scene.

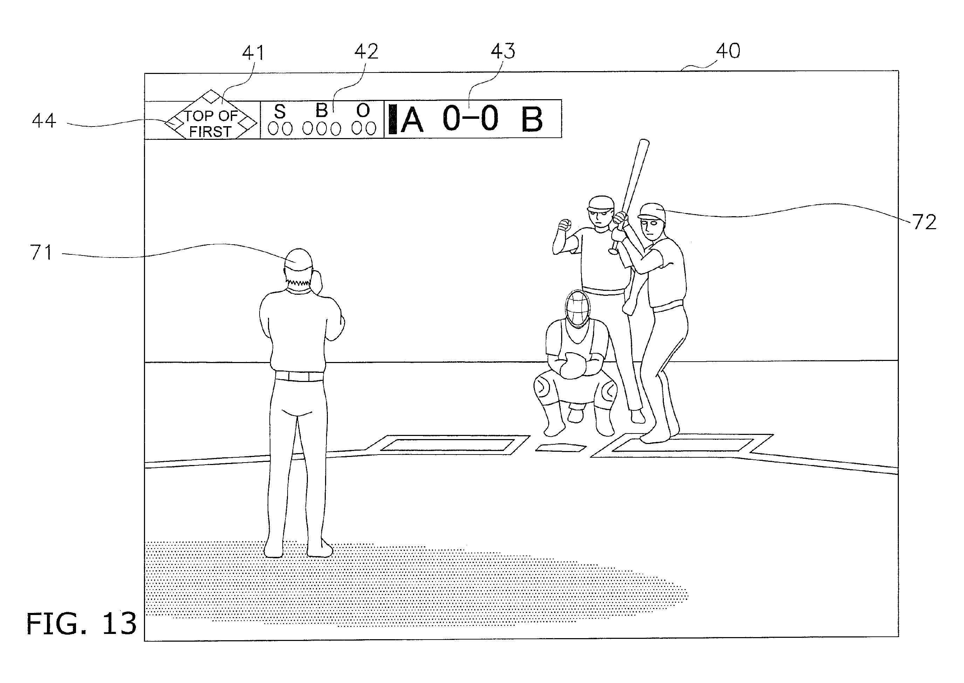

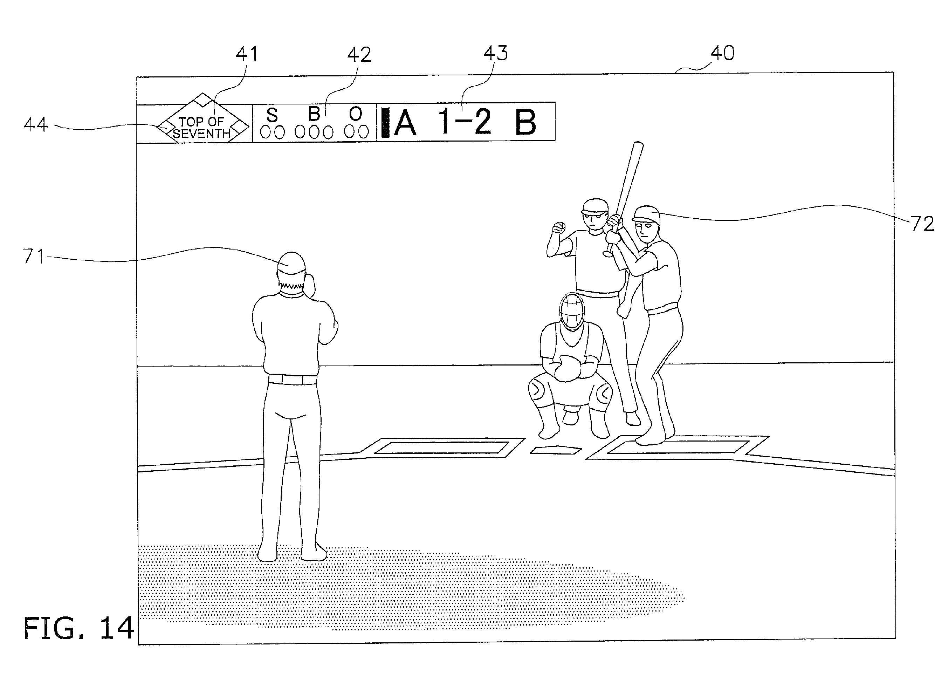

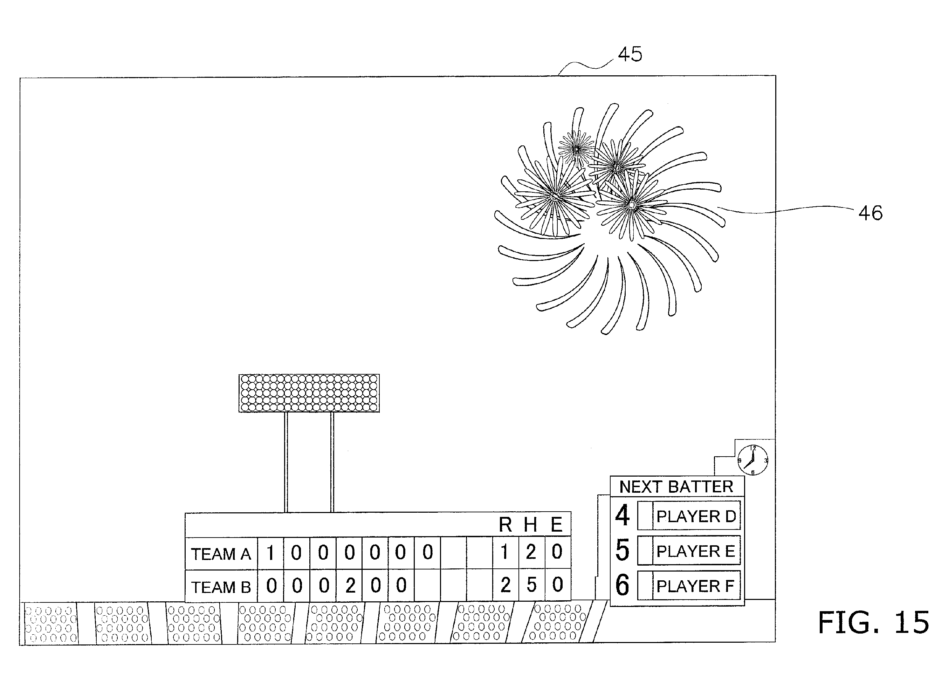

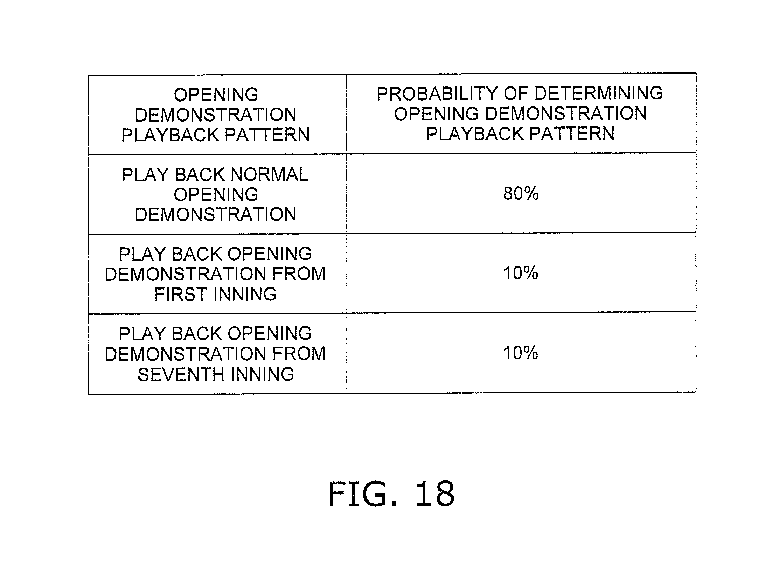

In the highlight scene determining means 55, when the virtual competition game has a scene in which the score is tied 1 to 1 and a runner is on second base (scoring position) in offense at the bottom of the fourth inning, a scene in which the second-base runner returns to base and one team moves ahead 2 to 1 if the batter character 72 makes a hit is the only highlight scene in the virtual competition game, but when other highlight conditions shown in FIG. 16 are satisfied, one of these highlight conditions may be determined at random by the CPU 7, or more than one of these highlight conditions may be selected by the CPU 7. A configuration may also be adopted in which a highlight scene having the highest numerical value from among various types of numeric conditions relating to game development of the virtual competition game is determined by the CPU 7 to be the highlight scene of the virtual competition game. For example, the predetermined highlight conditions for each predetermined inning shown in FIG. 16 may be placed in order of priority, and the highlight scene may be determined using the condition of highest priority. Patterns for playing back the opening demonstration may also be sorted by the conversion table shown in FIG. 18 of probabilities of determining an opening demonstration playback pattern for each opening demonstration playback pattern. Specifically, as shown in FIG. 18, when the pattern is the "play back normal opening demonstration" pattern for determining the highlight scene by the aforementioned inning check, the probability of determining an opening demonstration playback pattern is "80%." When the pattern is the "play back normal opening demonstration from first inning" pattern for determining the highlight scene as playback from the top of the first inning as shown in FIG. 13 without conditions, the probability of determining an opening demonstration playback pattern is "10%." When the pattern is the "play back normal opening demonstration from seventh inning" pattern for determining the highlight scene as playback from the top of the seventh inning as shown in FIG. 14 when the stadium launches a fireworks display after completion of the top of the seventh inning (when the demonstration video is one that has a fireworks video display region 46 in which fireworks are launched in the changeover display screen 45 shown in FIG. 15), the probability of determining an opening demonstration playback pattern is "10%," and the "play back normal opening demonstration" pattern is not always selected. In this arrangement, the probability of determining an opening demonstration playback pattern is "80%," the "play back normal opening demonstration" pattern is determined, and the previously described scene in which the score is tied 1 to 1 and a runner is on second base (scoring position) in offense at the bottom of the fourth inning is selected as the highlight scene. Various types of data are stored in the RAM 12 that include information that the highlight scene determined by the highlight scene determining means 55 is a scene in which the second-base runner returns to base and one team moves ahead 2 to 1 if the batter character 72 makes a hit when the virtual competition game has a scene in which the score is tied 1 to 1 and a runner is on second base (scoring position) in offense at the bottom of the fourth inning.

The opening demonstration video determining means 53 is provided with a function for determining, through the use of the CPU 7, an opening demonstration video that includes the highlight scene that was determined by the highlight scene determining means 55 in the virtual competition game. Through the opening demonstration video determining means 53, an opening demonstration video that includes the highlight scene that was determined by the highlight scene determining means 55 in the virtual competition game is determined by the CPU 7. The opening demonstration video determining means 53 is provided with a function for determining, through the use of the CPU 7, to start the opening demonstration video from a scene that occurs a predetermined time prior to the highlight scene in the virtual competition game. Through the opening demonstration video determining means 53, the CPU 7 determines to start the opening demonstration video from a scene that occurs a predetermined time prior to the highlight scene in the virtual competition game. The opening demonstration video in this case is displayed/played back as a movie showing what the baseball game looks like when actually being played, as shown in FIG. 11, and is displayed/played back before the player begins a competition with another player or the CPU 7. When the highlight scene is a scene in which the score is tied 1 to 1 and a runner is on second base (scoring position) in offense at the bottom of the fourth inning, as shown in FIG. 11, when the batter character 72 makes a hit when the ball count is 1 strike, 2 balls, the opening demonstration video that is determined to be displayed/played back is one that begins from a ball count of 0 strikes, 0 balls. In this arrangement, when the highlight scene determined by the opening demonstration video determining means 53 is a scene in which the score is tied 1 to 1 and a runner is on second base (scoring position) in offense at the bottom of the fourth inning, various types of data are stored in the RAM 12 that include information indicating that a scene that begins from a ball count of 0 strikes, 0 balls is to be displayed/played back as the opening demonstration video when the batter character 72 makes a hit when the ball count is 1 strike, 2 balls.

The opening demonstration video display/playback means 54 is provided with a function whereby the opening demonstration video determined by the opening demonstration video determining means 53 is displayed/played back on the television monitor 20 by the CPU 7 prior to the start of a competition game. Through the opening demonstration video display/playback means 54, the opening demonstration video determined by the opening demonstration video determining means 53 is displayed/played back on the television monitor 20 by the CPU 7 prior to the start of a competition game. In this arrangement, when the highlight scene determined by the opening demonstration video determining means 53 is a scene in which the score is tied 1 to 1 and a runner is on second base (scoring position) in offense at the bottom of the fourth inning, as shown in FIG. 11, an opening demonstration video that begins from a ball count of 0 strikes, 0 balls is displayed/played back in the competition display screen 40 on the television monitor 20 by the opening demonstration video display/playback means 54 when the batter character 72 makes a hit when the ball count is 1 strike, 2 balls.

In this game program, through the highlight scene determining means 55, a highlight scene in the virtual competition game that satisfies a predetermined highlight condition is determined from within the virtual competition game after a virtual competition game has been played by the CPU 7; through the opening demonstration video determining means 53, an opening demonstration video that includes the highlight scene in the virtual competition game that was determined by the highlight scene determining means 55 is determined by the CPU 7; and through the opening demonstration video display/playback means 54, the opening demonstration video determined by the opening demonstration video determining means 53 is displayed/played back on the television monitor 20 by the CPU 7 prior to the start of a competition game. Specifically, through the highlight scene determining means 55, since the conditions "Chance for a head-start/go-ahead if all the runners in scoring position return" and "Chance to come from behind if all the runners in scoring position return" are satisfied when the inning is "first through sixth," the scene in which the score is 1 to 1 and a runner is on second base (scoring position) in offense at the bottom of the fourth inning is determined as the highlight scene in the virtual competition game by the highlight scene determining means 55. Then, through the opening demonstration video determining means 53, an opening demonstration video that begins from a ball count of 0 strikes, 0 balls when the batter character 72 makes a hit when the ball count is 1 strike, 2 balls is determined to be the opening demonstration video by the opening demonstration video determining means 53. Then, through the opening demonstration video display/playback means 54, when the highlight scene determined by the opening demonstration video determining means 53 is a scene in which the score is tied 1 to 1 and a runner is on second base (scoring position) in offense at the bottom of the fourth inning, an opening demonstration video that begins from a ball count of 0 strikes, 0 balls is displayed/played back on the television monitor 20 by the opening demonstration video display/playback means 54 when the batter character 72 makes a hit when the ball count is 1 strike, 2 balls. When the highlight scene that is the scene of highest intensity of the match in the virtual competition game is the scene in which the score is tied 1 to 1 and a runner is on second base (scoring position) in offense at the bottom of the fourth inning, as shown in FIG. 11, since an opening demonstration video that begins from a ball count of 0 strikes, 0 balls is displayed/played back when the batter character 72 makes a hit when the ball count is 1 strike, 2 balls, an opening demonstration video can be displayed/played back that is more appealing to the player than the video displayed/played back in the conventional technique, which always begins from the top of the first inning. The player is therefore less likely to become disinterested in viewing the opening demonstration movie.

FIG. 11 is a diagram that corresponds to FIG. 7 of the aforementioned embodiment, but only the components that differ from those of the aforementioned embodiment will be described, which are the inning display region 41, count display region 42, game score display region 43, and runner fielding status display region 44 of the competition display screen 40. The other components are the same as in the aforementioned embodiment, and no detailed description thereof will be given.

As shown in FIG. 11, the competition display screen 40 has the inning display region 41 positioned at the upper left of the screen, the count display region 42 positioned to the right of the inning display region 41 in the upper part of the screen, the game score display region 43 positioned to the right of the count display region 42 in the upper part of the screen, and the runner fielding status display region 44 on the periphery of the inning display region 41 at the upper left of the screen.

The current inning number is displayed in the inning display region 41, and the text characters "bottom of fourth" are displayed in FIG. 11. The text characters S, B, and O indicating the strike count, the ball count, and the out count, respectively, are displayed from left to right in the count display region 42, and two, three, and two circle graphic characters indicating the count numbers are displayed from top to bottom below the text characters S, B , and O, respectively. In FIG. 11, the one, two, and two circle graphic characters from left to right of the circle graphic characters below the text characters S, B, and O are displayed in the colors yellow, green, and red, thereby indicating "1 strike, 2 balls, 2 outs." Text characters indicating the opponent team names, text characters indicating the score, and a rectangular graphic character indicating the current offensive team are displayed in the game score display region 43, and the display in FIG. 11 indicates that "Team A has a score of 1, Team B has a score of 1, and the current offensive team is Team B." A substantially fan-shaped graphic character resembling the field is displayed in the runner fielding status display region 44, and the runner status or fielding status is indicated by the position of a runner character or fielder character. Since a rectangular runner character is displayed on second base in FIG. 11, the indicated runner status is "second base" (scoring position).

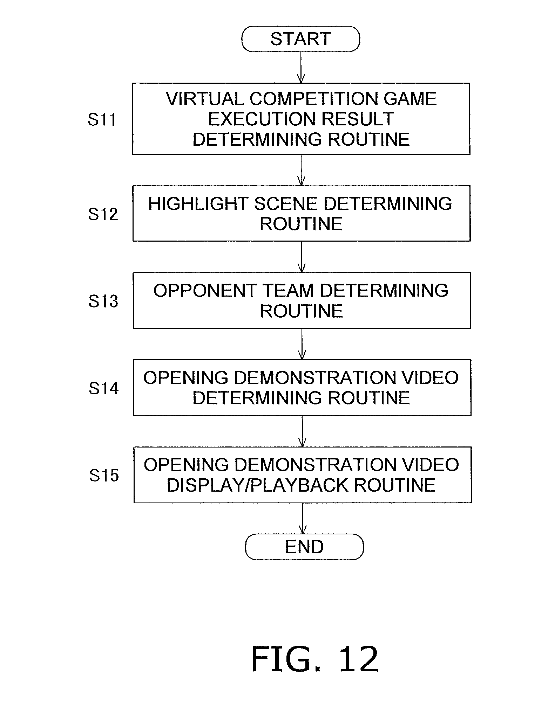

FIG. 12 is a diagram that corresponds to FIG. 8 of the aforementioned embodiment, but only the routines thereof that differ from those of the aforementioned embodiment will be described, which are the virtual competition game execution result determining routine of step S11 and the highlight scene determining routine of step S12. The other routines are the same as in the aforementioned embodiment, and no detailed description thereof will be given.

First, as shown in FIG. 12, the virtual competition game execution result determining routine is performed for executing the virtual competition game by the CPU 7 and determining the result of the virtual competition game (S11). When the result of the virtual competition game is determined in the virtual competition game execution result determining routine of step S11, a highlight scene determining routine is performed for determining the highlight scene in the virtual competition game (S12).

In the highlight scene determining routine of step S12, after the virtual competition game has been played by the CPU 7, a highlight scene in the virtual competition game that satisfies a predetermined highlight condition is determined from within the virtual competition game. Specifically, in the highlight scene determining routine of step S12, when the virtual competition game has a scene in which the score is tied 1 to 1 and a runner is on second base (scoring position) in offence at the bottom of the fourth inning, as shown in FIG. 11, since a hit by the batter character 72 would result in a scene in which the second-base runner returns to base and one team moves ahead 2 to 1, the conditions "Chance for a head-start/go-ahead if all the runners in scoring position return" and "Chance to come from behind if all the runners in scoring position return" are satisfied when the inning is "first through sixth," and the scene in which the score is 1 to 1 and a runner is on second base (scoring position) in offense at the bottom of the fourth inning is determined as the highlight scene in the virtual competition game by the highlight scene determining routine of step S12. When the highlight scene is determined by the highlight scene determining routine of step S12, the process proceeds to an opening demonstration video determining routine for determining the opening demonstration video (S13). The opponent team determining routine of step S13, the opening demonstration video determining routine of step S14, and the opening demonstration video display/playback routine of step S15 correspond to the opponent team determining routine of step S1, the opening demonstration video determining routine of step S2, and the opening demonstration video display/playback routine of step S3 in FIG. 8, and therefore, no detailed description thereof will be given.

When the highlight scene that is the scene of highest intensity of the match in the virtual competition game is the scene in which the score is tied 1 to 1 and a runner is on second base (scoring position) in offense at the bottom of the fourth inning, as shown in FIG. 11, since an opening demonstration video that begins from a ball count of 0 strikes, 0 balls is displayed/played back when the batter character 72 makes a hit when the ball count is 1 strike, 2 balls, an opening demonstration video can be displayed/played back that is more appealing to the player than the video displayed/played back in the conventional technique, which always begins from the top of the first inning. The player is therefore less likely to become disinterested in viewing the opening demonstration movie.

## Claims

1. A game program for implementing functions in a computer that is capable of implementing, via a control unit, a game for displaying/playing back on a monitor, before the start of a competition game played by operation of an operating unit of a player, an opening demonstration video of a competition game played by said control unit, the program comprising:
an opponent team determining function for determining, by operation of said operating unit of said player, an opponent team in the competition game played by said control unit;
an opening demonstration video determining function for determining through the use of said control unit the opening demonstration video of the competition game that is a competition with said opponent team determined by said opponent team determining function; and
an opening demonstration video display/playback function for displaying, through the use of said control unit before the start of said competition game, the opening demonstration video determined by said opening demonstration video determining function on said monitor.

2. The game program according to claim 1, wherein said competition game determining function is a function for determining, by operation of said operating unit of said player, two opponent teams in the competition game played by said control unit.

3. The game program according to claim 1, wherein said opponent team determining function is a function for determining, by operation of said operating unit of said player, one opponent team in the competition game played by said control unit; and determining, by said control unit, the remaining opponent team in the competition game played by said control unit.

4. The game program according to any of claims 1 through 3, wherein said opponent team determining function is a function for determining an opponent team in the competition game played by said control unit, by selecting one or two opponent teams by operation of an operating unit of a player from among a plurality of opponent teams stored in advance in a memory unit.

5. The game program according to any of claims 1 through 4, wherein said computer is furthermore caused to implement a highlight scene determining function for determining a highlight scene in a virtual competition game, the highlight scene satisfying a predetermined highlight condition from said virtual competition game, after the playing of a virtual competition game that is played in virtual fashion by said control unit before the start of said competition game and not displayed on said monitor; and
said opening demonstration video determining function is a function for determining, through the use of said control unit, an opening demonstration video that includes the highlight scene in said virtual competition game determined by said highlight scene determining function.

6. The game program according to claim 5, wherein said highlight scene in said virtual competition game is a video that is played back for the duration of a predetermined time that satisfies said predetermined highlight condition.

7. The game program according to claim 5 or 6, wherein said predetermined highlight condition is a condition that relates to game development of said virtual competition game, the condition being stored in advance in table form in a memory unit.

8. The game program according to claim 7, wherein
said predetermined highlight condition comprises a variety of numeric conditions that relate to game development of said virtual competition game, the numeric conditions being stored in advance in table form in a memory unit; and
said highlight scene determining function is a function for determining, through the use of said control unit, that [a highlight scene] having the highest numerical value from among the variety of numeric conditions relating to game development of said virtual competition game is the highlight scene in said virtual competition game.

9. The game program according to claim 8, wherein the variety of numeric conditions relating to game development of said virtual competition game vary according to a predetermined probability value.

10. The game program according to any of claims 5 through 9, wherein said opening demonstration video determining function is a function for determining through the use of said control unit to start said opening demonstration video from a scene that occurs a predetermined time before the highlight scene in said virtual competition game.

11. A game apparatus for implementing a game for displaying/playing back on a monitor, before the start of a competition game played by operation of an operating unit of a player, an opening demonstration video of a competition game played by a control unit, the game apparatus comprising:
opponent team determining means for determining, by operation of said operating unit of said player, an opponent team in the competition game played by said control unit;
opening demonstration video determining means for determining through the use of said control unit the opening demonstration video of the competition game that is a competition with said opponent team determined by said opponent team determining means; and
opening demonstration video display/playback means for displaying on said monitor, through the use of said control unit before the start of said competition game, the opening demonstration video determined by said opening demonstration video determining means.

12. A game control method for controlling by a computer a game for displaying/playing back on a monitor, before the start of a competition game played by operation of an operating unit of a player, an opening demonstration video of a competition game played by a control unit, the game control method comprising:
an opponent team determining step of determining, by operation of said operating unit of said player, an opponent team in the competition game played by said control unit;
an opening demonstration video determining step of determining through the use of said control unit the opening demonstration video of the competition game that is a competition with said opponent team determined by said opponent team determining step; and
an opening demonstration video display/playback step of displaying on said monitor, through the use of said control unit before the start of said competition game, the opening demonstration video determined by said opening demonstration video determining step.
